# FASCICULE DE BREVET EUROPEEN

(11) **EP 2 201 576 B1**
(45) Date de publication et mention de la délivrance du brevet: **04.07.2012**
(21) Numéro de dépôt: 08842963.4
(22) Date de dépôt: 20.10.2008
(51) Int. Cl.: G21C 15/18, G21C 9/00

(54) **REACTEUR NUCLEAIRE A REFROIDISSEMENT AMELIORE EN SITUATION D'ACCIDENT**
KERNREAKTOR MIT VERBESSERTER KÜHLUNG BEI STÖRFÄLLEN
NUCLEAR REACTOR WITH IMPROVED COOLING IN AN ACCIDENT SITUATION

(30) Priorité: 22.10.2007 FR 0758463
(43) Date de publication de la demande: 30.06.2010
(73) Titulaire: Commissariat à l'Énergie Atomique et aux Énergies Alternatives, 75015 Paris (FR)
(72) Inventeur: PELISSON, Roland, Francis, 38660 La Terrasse (FR)
(74) Mandataire: Ilgart, Jean-Christophe
(86) Numéro de dépôt international: PCT/EP2008/064088
(87) Numéro de publication internationale: WO 2009/053322

(56) Documents cités:
- EP-A- 1 233 423
- FR-A- 2 507 373
- US-A- 5 825 838

## Description

### DOMAINE TECHNIQUE ET ART ANTÉRIEUR

La présente invention se rapporte à un réacteur nucléaire dont le refroidissement est amélioré en situation d'accident, plus particulièrement le refroidissement extérieur de la cuve du réacteur dans laquelle est confiné le coeur de réacteur, lors d'un accident grave.

Un réacteur nucléaire comporte, de manière générale un coeur de réacteur contenant le combustible nucléaire par exemple sous la forme de crayon ou de plaque, le coeur étant confiné dans une cuve, un circuit primaire permettant à de l'eau d'entrer dans la cuve, de circuler dans celle-ci pour prélever les calories générées par la réaction nucléaire dans le coeur et de sortir de celle-ci. Le réacteur comporte également un circuit secondaire, dans lequel circule également de l'eau. Les circuits primaire et secondaire sont isolés l'un de l'autre, mais des échanges thermiques ont lieu entre l'eau du circuit primaire sortant de la cuve et l'eau du circuit secondaire. L'eau du circuit secondaire est vaporisée et est envoyée vers des turbines pour produire du courant électrique.

Le coeur du réacteur est par conséquent en fonctionnement normal noyé dans l'eau.

La cuve est, quant à elle, disposée dans un puits en béton lui servant de support et formant un bouclier aux radiations.

Des systèmes de secours sont prévus pour assurer, en cas de panne ou fuite des circuits primaires ou secondaires provoquant une dégradation du refroidissement normal du réacteur, le refroidissement du coeur. Cependant, en cas de défaillances simultanées des systèmes de secours, la puissance résiduelle du coeur n'est pas évacuée de manière suffisante, ce qui provoque une vaporisation de l'eau autour du coeur provoquant une réduction progressive du niveau d'eau dans lequel est normalement noyé le coeur.

La vaporisation progressive de l'eau liquide provoque alors un échauffement des crayons (ou des plaques) de combustibles du coeur, cet échauffement étant amplifié par la présence de vapeur qui crée une réaction très exothermique d'oxydation des gaines des crayons. Les gaines cassent, libèrent leur contenu et forment un lit de débris capable de se transformer en magma, appelé corium.

Dans des cas extrêmes, le coeur du réacteur tend à se relocaliser en fond de cuve sous forme de coulées successives de corium. Le bain ainsi obtenu (appelé bain de corium), qui représente plusieurs dizaines de tonnes à des températures de l'ordre de 2700 K, peut provoquer une réduction de l'épaisseur de la cuve, voire son percement.

Une solution pour éviter le percement de la cuve est alors d'effectuer un refroidissement externe en noyant la cuve dans de l'eau. Pour cela, le puits dans lequel la cuve est disposée, est rempli avec l'eau disponible dans les piscines et autres réserves de la centrale nucléaire. Les échanges thermiques avec l'eau étant bien meilleurs que ceux avec l'air du fait de la faible convection avec l'air et du rayonnement thermique contrarié par la présence du bouclier, la température externe de la cuve est maintenue très proche de celle de l'eau. Dans de telles conditions, même à forts flux, il est possible de maintenir une épaisseur de paroi de la cuve suffisante et une température de la paroi inférieure à celle de fluage, qui est de l'ordre de 600°C, pour assurer le confinement du corium.

Le refroidissement de la cuve s'effectue alors par convection naturelle.

Cependant, pratiquement, la convection naturelle est souvent gênée par :
- l'espace insuffisant entre la cuve et le bouclier thermique,
- le léchage de la paroi inférieure de la cuve par la vapeur,
- l'apparition de bouchons de vapeur qui se forment en partie haute de la cuve.

De plus, le phénomène de convection naturelle s'accompagne d'une formation importante de bulles de vapeur sur la paroi externe de la cuve, surtout dans les cas où les flux d'énergie entre l'eau et la cuve sont très importants, de l'ordre du Mégawatt/m² ou plus dans le cas d'un gros réacteur.

Ces bulles de vapeur, lorsque leur quantité est limitée, ont un effet positif sur le refroidissement des parois de la cuve en provoquant un microbrassage de l'eau le long de la paroi, ce qui favorise les phénomènes d'échanges thermiques ; ce phénomène est appelé ébullition nucléée.

Par contre, à très forts flux thermiques, la quantité de bulles de vapeur devient très importante et les bulles de vapeur se trouvent plaquées contre la paroi, formant alors une couche thermiquement isolante, faisant chuter le coefficient d'échange thermique entre la paroi et l'eau. Ce phénomène s'appelle la crise d'ébullition liée à la présence d'un flux critique. Dans ce cas, pour les réacteurs de forte puissance, la paroi n'est plus refroidie correctement, l'intégrité de la cuve ne peut être garantie. Cette crise d'ébullition, dans le cas d'un refroidissement par simple convection naturelle, ne peut quasiment pas être évitée.

Il a par exemple été proposé, pour retarder l'apparition de la couche isolante de vapeur et donc l'apparition de la crise d'ébullition, de prévoir la présence de nanoparticules dans l'eau ou un revêtement de surface sur la face extérieure de la cuve, voire une simple oxydation de celle-ci, destiné à favoriser l'aspect mouillant de la paroi et donc éviter l'accumulation de bulles de vapeur.

En outre, pour les réacteurs de plus de 600MW, en particulier dans le cas où une couche métallique se forme au-dessus des oxydes du bain de corium, l'énergie thermique se focalise dans une zone de la cuve du fait de sa convection horizontale et de son fort coefficient d'échange avec la paroi de la cuve, ce phénomène est désigné par « focusing effect » en terminologie anglo-saxonne, provoquant le percement de la paroi de la cuve à l'endroit où l'énergie du bain de corium se concentre.

Le document US 5 825 838 décrit un sytème de recirculation d'eau dans un canal annulaire, dans lequel la vapeur est évacuée a l'intérieur de l'enceinte de confinement. Le document EP1233423 un système dans lequel la vapeur est condensée et collectée dans une chambre séparée prévue dans l'enceinte de confinement.

Le document FR 2 507 373 décrit un dispositif utilisant la condensation de la vapeur d'eau contenue dans l'atmosphère interne de l'enceinte de confinement de la cuve pour obtenir l'énergie mécanique permettant la sauvegarde de l'installation.

C'est par conséquent un but de la présente invention d'offrir un système de sécurité apte à éviter le percement de la cuve en cas d'accidents sans nécessiter d'intervention humaine extérieur ou d'apport d'énergie extérieure, le système étant tel qu'il peut fonctionner dans des conditions extrêmes et variables.

### EXPOSÉ DE L'INVENTION

Le but précédemment énoncé est atteint par un réacteur nucléaire muni d'un système autonome de mise en convection forcée de l'eau de refroidissement située autour de la cuve du réacteur nucléaire, en cas d'accident grave, pour permettre la rétention en cuve du corium, grâce au repoussement du risque d'apparition de la crise d'ébullition au delà des flux maximaux envisagés par les scénarios d'accidents graves.

Le système comporte notamment une pompe pour forcer l'écoulement de l'eau le long de la paroi extérieure, cette pompe étant entraînée par la vapeur à partir de l'eau contenue dans le puits de cuve, et dans lequel la cuve est noyée en cas d'accident. Ainsi, aucun apport d'énergie extérieure n'est nécessaire pour provoquer cette convection forcée. Cette convection forcée est alors assurée même en cas de pannes graves provoquant une interruption de l'alimentation électrique.

En d'autres termes, on prévoit d'améliorer le refroidissement externe sous eau de la cuve du réacteur nucléaire par des moyens provoquant un refroidissement par mise en convection forcée de l'eau autour de la cuve, ce refroidissement s'ajoutant au refroidissement par convection naturelle, ces moyens fonctionnant de manière autonome.

Pour cela, le réacteur selon la présente invention comporte des moyens pour récupérer le vapeur générée autour de la cuve, des moyens pour actionner une pompe à partir de l'énergie cinétique de la vapeur - l'énergie cinétique de cette vapeur n'étant actuellement pas valorisée - une pompe entraînée par cette énergie, apte à provoquer une convection forcée de l'eau autour de la cuve. Une cloison de séparation est réalisée dans l'enceinte de confinement, de sorte à former une chambre de collecte de la vapeur produite au niveau du puits de cuve et provoquer l'apparition d'une suppression. Cette cloison sépare la chambre de collecte de l'enceinte de confinement.

On utilise donc la force motrice de la surpression de vapeur collectée.

En convection forcée, le débit de l'eau en circulation serait de l'ordre de 3 m/s, tandis qu'en convection naturelle on peut estimer à environ 0,5 m/s le débit d'eau autour de la cuve. Par ailleurs, le flux critique, qui conduit au percement de la cuve, est fonction du débit massique à la puissance 1/3. Par conséquent une augmentation du débit massique de l'eau provoque une augmentation du flux critique, qui est alors repoussé au delà du flux maximal auquel peut être soumise la cuve dans la zone du « focusing effect ».

Il est à noter que la présente invention offre un système de sécurité ultime capable de fonctionner dans des conditions extrêmement dégradées, par exemple quand toutes les alimentations électriques ou autres, par exemple diesel, sont en panne.

L'invention consiste donc à mettre en mouvement l'eau à l'extérieur de la cuve le long de sa paroi au moyen d'une pompe favorisant la convection externe, et ceci en utilisant la vapeur créée par la dissipation à l'extérieur de la cuve de l'énergie résiduelle du coeur fondu.

L'invention présente l'avantage d'être autonome formant effectivement un système de sécurité ultime ne nécessitant ni la présence d'un opérateur, ni d'une quelconque source d'énergie autre que celle dégagée par l'accident.

En outre, le système selon la présente invention privilégie la robustesse, i.e. l'aptitude à fonctionner dans des conditions extrêmes, plutôt que le fonctionnement à rendement élevé, afin que son fonctionnement soit garanti dans des conditions précaires dans lesquelles l'eau circulant peut être chargée de résidus et des fuites de vapeur peuvent exister suite à l'accident.

En outre, le système de sécurité selon l'invention peut fonctionner dans de larges plages de débit de vapeur et de pression, par exemple entre 1 bar et 5 bars dans l'enceinte de confinement et un débit de vapeur pouvant atteindre jusqu'à 10 m³/s.

La présente invention a alors principalement pour objet un réacteur nucléaire comportant une cuve destinée à contenir un coeur de réacteur, un circuit primaire pour le refroidissement du réacteur, un puits de cuve dans lequel est disposée la cuve, un canal annulaire entourant une partie inférieure de la cuve dans le puits de cuve, des moyens aptes à remplir le puits de cuve avec un liquide, une enceinte de confinement du réacteur, des moyens de collecte de la vapeur générée à une extrémité supérieure du puits de cuve disposés dans l'enceinte et définissant un volume séparé par rapport au volume de l'enceinte de confinement de sorte à permettre l'apparition d'une suppression de vapeur, des moyens aptes à générer une convection forcée de l'eau dans le canal annulaire, et des moyens pour actionner les moyens aptes à générer une convection forcée au moyen de ladite vapeur collectée.

Par exemple, les moyens aptes à collecter la vapeur sont formés par une chambre de collecte séparée de l'enceinte de confinement et comportent un passage d'évacuation mettant en communication la chambre de collecte et l'enceinte de confinement, les moyens pour actionner les moyens aptes à générer une convection forcée étant interposés dans ledit passage d'évacuation pour transformer l'énergie cinétique/potentielle de la vapeur collectée en énergie motrice entraînant les moyens aptes à générer une convection forcée.

Les moyens pour actionner les moyens aptes à générer une convection forcée comportent avantageusement une pompe à lobes et un mécanisme de transmission relié aux moyens aptes à générer une convection forcée, la pompe à lobes offrant une grande robustesse et une grande simplicité de construction.

Les moyens aptes à générer une convection forcée peuvent comporter une pompe de circulation disposée dans une extrémité inférieure du puits de cuve au niveau d'une entrée du canal annulaire.

Le mécanisme de transmission comporte, par exemple des premier et deuxième arbres en prise respectivement avec la pompe à lobes et la pompe de circulation et un renvoi d'angle entre les premier et deuxième arbres. Ce mécanisme est très simple et adapté au fonctionnement en conditions extrêmes.

Les moyens pour remplir le puits de cuve de liquide comportent par exemple une réserve de liquide et un conduit reliant ladite réserve à l'extrémité inférieure du puits, ledit conduit étant apte à alimenter le puits en air de refroidissement en fonctionnement normal.

La réserve apte à communiquer avec la chambre de collecte et le conduit est connectée à la chambre de collecte par un connecteur présentant avantageusement une forme évasée, ce qui permet d'éviter les phénomènes de cavitation.

La réserve est avantageusement prévue à une altitude supérieure à celle du puits de cuve de manière à ce que l'écoulement de l'eau de la réserve vers le puits de cuve s'effectue par gravité., ce qui évite la mise en oeuvre de dispositif supplémentaire, ou au moyen d'une pompe entraînée par les moyens pour actionner les moyens aptes à générer une convection forcée ; le système de refroidissement est alors complètement autonome.

Les moyens pour actionner les moyens aptes à générer une convection forcée peuvent également être raccordés à un dispositif de conversion d'énergie mécanique en énergie électrique, pour alimenter des systèmes de secours et/ou de surveillance.

La chambre de collecte comporte avantageusement une soupape de sécurité permettant une évacuation de la vapeur vers l'enceinte de confinement en cas d'apparition d'une surpression dans la chambre de collecte supérieure à une valeur donnée, par exemple de l'ordre de 0,3 bar.

Le réacteur nucléaire selon peut également comporter un séparateur eau/vapeur en amont de la pompe et de la soupape dans les cas de chambre de collecte de dimensions réduites.

La présente invention a également pour objet l'utilisation de la vapeur générée autour d'un réacteur nucléaire lors d'un accident, ledit réacteur nucléaire comportant une cuve contenant un coeur nucléaire, un puits de cuve dans lequel est disposée ladite cuve et un canal annulaire entre la cuve et le puits de cuve, ladite vapeur étant la vapeur générée par un liquide remplissant le canal annulaire lors d'un accident, ladite vapeur étant utilisée pour entraîner des moyens aptes a générer une convection forcée dudit liquide dans le canal annulaire autour de la cuve.

La vapeur générée peut également être utilisée pour entraîner une pompe d'alimentation en eau du puits de cuve.

La vapeur générée peut également être utilisée pour produire de l'électricité pour alimenter des dispositifs de surveillance.

### BRÈVE DESCRIPTION DES DESSINS

La présente invention sera mieux comprise à l'aide de la description qui va suivre et des dessins sur lesquels :
- la figure 1 est une vue en coupe schématique représentant partiellement un réacteur muni d'un système de sécurité selon la présente invention,
- la figure 2 est une représentation graphique de la distribution de température dans la paroi du fond de cuve dans le cas d'un refroidissement sous eau d'un réacteur selon la présente invention,
- les figures 3A et 3B sont des représentations graphiques de la vitesse d'écoulement de l'eau le long de la cuve dans un réacteur selon l'invention et dans un réacteur de l'état de la technique respectivement,
- les figures 4A et 4B sont des représentations graphiques de la pression le long de la cuve dans un réacteur selon l'invention et dans un réacteur de l'état de la technique respectivement.

### EXPOSÉ DÉTAILLÉ DE MODES DE RÉALISATION PARTICULIERS

La présente invention sera décrite dans le cadre d'un réacteur à eau pressurisée (REP) de forte puissance, supérieure à 1000 MWe, mais la présente invention s'applique également à des réacteurs de plus faible puissance.

Dans la description qui va suivre, le liquide de refroidissement utilisé est l'eau pure, mais toute autre composition offrant des propriétés thermiques adaptées peut convenir (eau sale de ruissellement, eau chargée en nano-particules pour favoriser les échanges, ...).

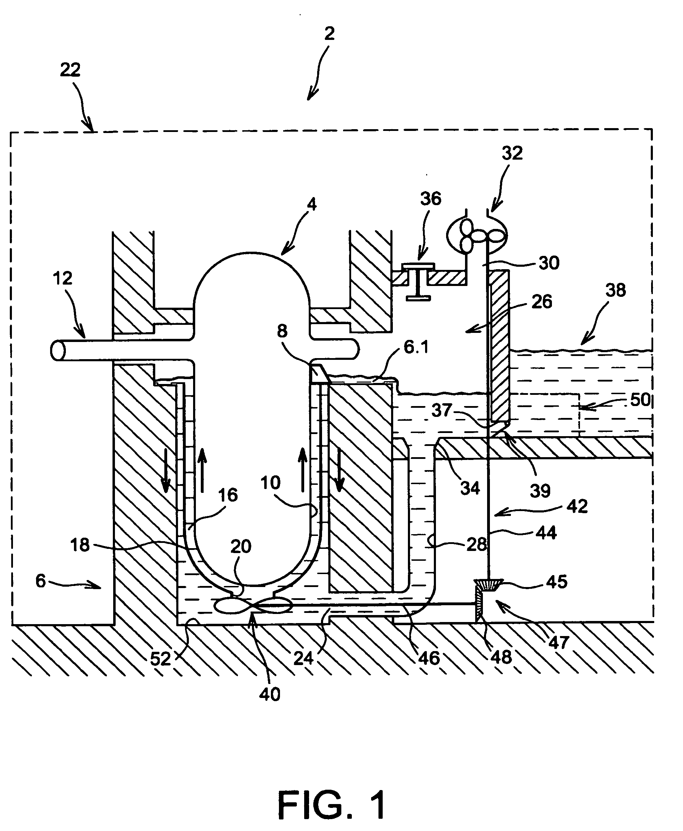

Sur la figure 1, on peut voir représenté partiellement un réacteur 2 selon la présente invention comportant une cuve 4 dont une partie inférieure est disposée dans un puits de cuve 6 en béton. La cuve 4 repose sur une extrémité supérieure 6.1 du puits de cuve 6 par l'intermédiaire d'une collerette 8 annulaire en saillie radialement vers l'extérieure de la cuve. La cuve 4 est reçue avec jeu dans le puits de cuve 6, un espace annulaire est alors présent entre la paroi latérale 10 de la cuve et la paroi du puits de cuve 6.

La cuve 4 délimite un espace confiné recevant du combustible nucléaire formant le coeur de réacteur (non représenté) ; le combustible nucléaire est par exemple sous la forme d'assemblage de crayons (ou de plaques) de combustible nucléaire.

Le puits de cuve 6 comporte également un bouclier contre les radiations thermiques émises par le coeur de réacteur.

Le réacteur 2 comporte également un circuit primaire 12 formé par des conduits hydrauliques entrant dans et sortant de la cuve au dessus du puits de cuve 6, et par lequel de l'eau entre et sort de la cuve 4. Cette eau forme un caloporteur destiné à collecter l'énergie du coeur de réacteur. Le circuit primaire coopère avec un circuit secondaire (non représenté) par lequel le fluide qu'il transporte est refroidi. La vapeur générée dans le circuit secondaire sert à faire tourner des turbines destinées à produire de l'électricité.

Un canal annulaire 16 est prévu autour de la paroi de la cuve 4 pour assurer un rôle d'isolation thermique en fonctionnement normal et la convection naturelle de l'eau en fonctionnement dégradé, lorsque le puits de cuve 6 est noyé.

Ce canal de refroidissement 16 est délimité par une enveloppe métallique 18 entourant la partie inférieure de la cuve 4 se trouvant dans le puits de cuve 6.

Cette enveloppe 18, ayant la forme de la partie inférieure de la cuve 4 et servant de bouclier thermique en fonctionnement normal, comporte un passage 20 dans son extrémité inférieure pour l'entrée de l'eau en fonctionnement accidentel.

Cette enveloppe 18 forme un bouclier thermique protégeant le béton du rayonnement thermique et le maintient à une température modérée, une circulation d'air étant prévue entre l'extérieur de ce bouclier et le béton du puits de cuve 6.

Le réacteur comporte également une enceinte de confinement 22 entourant la cuve 4 destinée à éviter, par exemple en cas de rupture du circuit primaire, une fuite d'eau chargée en éléments radioactifs. L'enceinte de confinement est une enveloppe, généralement de forme cylindrique, de grand volume, réalisée par exemple en béton et qui entoure le réacteur, le circuit primaire, les échangeurs et les pompes primaires

Un bouclier thermique peut également être prévu au niveau de l'extrémité supérieure de l'enveloppe 18 afin de protéger la structure en béton au niveau où elle supporte la cuve 4.

La collerette d'appui 8 et le bouclier thermique supérieur sont prévus pour éviter de former des obstacles à l'évacuation de l'air de refroidissement et de l'eau suivant le fonctionnement.

Au fond du puits de cuve 6, est prévu une entrée d'admission 24 de l'air de refroidissement en fonctionnement normal, formant une alimentation en eau du puits de cuve afin de le noyer.

Selon la présente invention, le réacteur prévoit de confiner la vapeur produite lors d'un refroidissement sous eau en cas d'accident et d'utiliser l'énergie cinétique/potentielle de la vapeur d'eau pour entraîner une pompe apte à provoquer une convection forcée dans le canal annulaire de refroidissement 16.

Pour cela, le réacteur comporte des moyens pour collecter la vapeur produite lors du refroidissement sous eau de la cuve et la mener jusqu'à une zone dans laquelle elle pourra être utilisée pour entraîner des moyens permettant une mise en mouvement de l'eau.

Ces moyens obturent notamment les passages des conduits du circuit primaire pratiqués dans la structure en béton, et comportent une chambre 26 rapportée sur un côté du puits de cuve 6 en communication avec celui-ci. La chambre 26 se situe dans l'enceinte, tout en étant séparée de l'enceinte de confinement de sorte à former un volume fermée par rapport au grand volume de l'enceinte de confinement.

La chambre de collecte 26 est plus particulièrement en communication avec l'extrémité supérieure de canal de refroidissement 16.

Ce cloisonnement à l'intérieur de l'enceinte, isole un petit volume de l'enceinte de confinement par rapport à son volume totale. Ce petit volume reçoit la vapeur produite dans le puits de cuve et permet l'apparition d'une surpression locale qui sera exploitée comme force motrice.

Cette chambre 26 collecte l'air chaud en situation normale sortant et la vapeur plus une partie de l'eau sortant du canal de refroidissement en situation accidentelle 16. Elle est, par exemple réalisée en béton armé apte à résister à une pression différentielle avec l'enceinte de confinement de 0,5 bar. Elle communique en partie basse avec un conduit 28 débouchant dans l'entrée d'admission 24 assurant l'alimentation en air frais du puits de cuve 6 en fonctionnement normal et, l'alimentation en eau du puits de cuve 6 en situation accidentelle comme nous l'expliquerons par la suite.

La chambre de collecte 26 comporte dans une partie supérieure une sortie 30 d'évacuation de la vapeur, cette sortie 30 étant équipée de moyens 32 aptes à entraîner une pompe au moyen de la vapeur, ces moyens 32 sont, par exemple une turbine ou une pompe à lobes.

On choisit, de manière avantageuse une pompe à lobes pour récupérer l'énergie de la vapeur, parce que celle-ci est particulièrement robuste. En effet elle ne comporte que deux pièces en mouvement rotatif et ne nécessite pas de maintenance. On peut en outre prévoir de majorer les paliers afin d'augmenter encore davantage la durabilité de la pompe.

De plus, la mise en route est automatique, même dans le cas d'un faible débit vapeur, contrairement à une turbine. La pression appliquée sur les lobes est directement transmise à la pompe accélérant la circulation du fluide autour de la cuve.

On pourrait également envisager d'utiliser une machine motrice à piston vapeur.

La chambre de collecte 26 comporte également une soupape de sûreté 36 fonctionnant par gravité, garantissant que la limite supérieure de la surpression ne sera jamais atteinte, cette limite étant par exemple comprise entre 0,2 à 0,3 bar. Cette soupape 36 est destinée à fonctionner, par exemple dans le cas où la pompe à lobes ou la turbine ne fonctionnerait pas et empêcherait la vapeur de s'échapper vers l'enceinte de confinement.

La chambre de collecte comporte dans sa partie inférieure une sortie 34 reliée au conduit 28 débouchant dans le fond du puits de cuve 6.

Dans l'exemple représenté, la chambre de collecte 26 est apte à communiquer avec des réserves d'eau 38, par exemple stockées dans des piscines pour pouvoir, en cas d'accident grave, noyer le puits de cuve, l'eau provenant de ces réserves s'écoulant par le conduit 28 dans le puits de cuve 6.

La mise en communication de la chambre de collecte 26 et des réserves 38 peut être réalisée par un canal horizontal 37 situé au niveau bas de la chambre de collecte 26 et communiquant avec l'enceinte de confinement.

On peut envisager que le remplissage du puits de cuve 6 s'effectue par gravité, les réserves d'eau étant surélevées par rapport au puits.

En outre, il est prévu de réguler le niveau d'eau liquide dans le puits afin de maintenir celui-ci sensiblement constant malgré l'évaporation.

On peut alors prévoir :
- une pompe entraînée par la vapeur via la pompe à lobes qui injecte du liquide dans le puits pour compenser les pertes de fluide dues à la vapeur qui s'échappe, la quantité maximale d'eau injectée devrait être d'environ 10 kg/s. Dans ce cas, le canal horizontal 37 situé au niveau inférieur de la chambre 26 de collecte de la vapeur est muni d'un clapet anti-retour 39 pour garantir le maintien de la surpression dans la chambre 26,
- que la compensation du volume d'eau évaporé soit effectuée par un apport d'eau délivré par gravité à partir d'une réserve d'eau permanente située à environ 2 à 3 m au dessus du niveau d'eau désiré dans la cuve, ce qui assurerait un apport d'eau malgré la pression interne plus élevée dans le système, qui est au plus de 0,3 bar du fait du tarage de la soupape. La compensation par gravité présente l'avantage de réduire le nombre de pièces en mouvement, ce qui est préférable pour un fonctionnement en conditions dégradées.

On prévoit avantageusement de disposer des moyens de filtrage 50 dans l'alimentation d'eau empêchant les débris trop importants de pénétrer. En effet, lors de l'accident, une partie de cette eau sera issue de la condensation de la vapeur dans l'enceinte (sur les parois ou via des rampes d'aspersion) et de son ruissellement jusqu'au puits de cuve. Dans l'exemple représenté les moyens de filtrage sont disposés dans la réserve d'eau.

On peut également prévoir un zone de dépôt 52 dans le fond du puits de cuve, cette zone de dépôt se trouve en dessous de l'entrée d'admission 24, cette zone de dépôt 52 complète avantageusement la filtration effectuée par les moyens 50.

Dans l'exemple représenté, la réserve d'eau 38 est représentée adjacente à la chambre de collecte 26, mais il est bien entendu qu'elle peut être prévue à distance de celle-ci et reliée à celle-ci par des conduits. On peut prévoir qu'il y ait plusieurs réserves séparées géographiquement. Par exemple, on peut prévoir que certaines réserves soient des réserves de sécurité activées en début d'accident pour noyer le puits de cuve 6 et que d'autres réserves soient des réservoirs de collecte des eaux de ruissellement en cours de refroidissement de la cuve. Dans ce cas, plusieurs conduits distincts d'alimentation en eau du puits sont prévus.

La pompe à lobes 32 est connectée mécaniquement à une pompe de circulation 40 disposée dans le fond du puits de cuve 6, juste en dessous du passage 20 dans le fond de l'enveloppe annulaire 18, pour mettre en convection forcée l'eau de refroidissement.

La pompe à lobes 32 est connectée à la pompe de circulation par une transmission mécanique 42 apte à transmettre la rotation de la pompe à lobes ou de la turbine 32 en rotation de la pompe de circulation 40. Dans l'exemple représenté, la transmission mécanique comporte un premier arbre 44, un deuxième bras 46 et un renvoi d'angle 47 entre les deux arbres 44, 46, assurant une démultiplication adéquate.

Le premier bras 44 est en prise à une première extrémité avec la pompe à lobes ou la turbine 32, et comporte à une deuxième extrémité un pignon conique 45, et un deuxième arbre 46 orthogonal au premier arbre 44 muni à une première extrémité un pignon conique 48 engrenant le pignon conique 45 et en prise à une deuxième extrémité avec la pompe de circulation 40.

Le mécanisme de transmission peut bien entendu être de forme plus complexe et avoir un rendement amélioré, mais la préférence est donnée à un mécanisme robuste apte à fonctionner dans des conditions dégradées.

La pompe de circulation 40, du fait de sa disposition en bas de cuve, est destinée à fonctionner à une température légèrement en dessous de la température de saturation, celle-ci va donc fonctionner proche de la cavitation. Par conséquent, il est préférable de choisir de positionner celle-ci le plus bas possible dans le circuit et de la choisir de grande dimension pour qu'elle crée une dépression d'entrée faible. On peut par exemple choisir une hélice sous tuyère en tant que pompe de circulation.

De manière avantageuse, on prévoit que le raccordement du conduit 28 à la chambre de collecte 26 soit évasé, ce qui permet de réduire au maximum les pertes de charge singulières liées à la connexion d'un tuyau à un volume. En effet, à cet endroit, la température de l'eau de refroidissement est proche de la température de saturation, par conséquent un phénomène de cavitation pourrait apparaître à cet endroit, si l'écoulement n'est pas optimisé, ce qui pourrait remplir partiellement de vapeur le conduit. En choisissant un tel raccordement, on réduit ce risque de cavitation.

Il est également envisageable de coupler la pompe à lobes 32 à un générateur électrique (non représenté), en parallèle à la pompe de circulation 40, pour alimenter des systèmes annexes, tels que des systèmes de surveillance, par exemple tels que des indicateurs d'état, comme des sondes de température ou de radioactivité, et des systèmes de secours supplémentaires. Ceci permet avantageusement d'avoir un système complètement autonome.

Nous allons maintenant expliquer le fonctionnement du système de sécurité selon l'invention, et plus généralement nous allons décrire le comportement du réacteur selon l'invention.

En fonctionnement normal, de l'eau circule dans la cuve 4 par l'intermédiaire du circuit primaire, cette eau est échauffée par échanges thermiques avec le coeur de réacteur. L'eau échauffée est refroidie par échanges thermique avec le circuit secondaire, la vapeur produite dans le circuit secondaire est utilisée pour actionner des turbines et produire de l'électricité. Grâce aux échanges thermiques entre le coeur de réacteur et le circuit primaire et entre le circuit primaire et le circuit secondaire, la température du coeur de réacteur est maintenue à une température à laquelle l'intégrité des crayons est assurée.

En cas de panne dans le système de refroidissement du coeur, par exemple dans le circuit secondaire et en cas de défaillance des systèmes de refroidissement de secours, l'ébullition de l'eau du circuit primaire, malgré l'arrêt du coeur (chute des barres de contrôle) conduit à son dénoyage, sa température atteint alors une température provoquant la fusion des gaines des crayons, il y a alors formation du corium. Le refroidissement par convection naturelle n'est pas suffisant. Un risque important de percement de la paroi de la cuve apparaît.

Le système de sécurité selon l'invention prévoit le remplissage du puits de cuve 6 avec de l'eau pour noyer l'extérieur de la cuve 4 au moyen de l'eau contenue dans les réserves, l'eau s'écoule dans le puits par le conduit 28 ou par d'autres conduits directement liés aux réserves de sécurité.

L'eau entourant la cuve 4 s'évapore partiellement; la vapeur ainsi formée est collectée dans la chambre de collecte 26, la chambre passe en légère surpression, puis la vapeur s'écoule par la sortie d'évacuation de la chambre de collecte, provoquant la rotation de la pompe à lobes 32, qui, via la transmission 42, entraîne la pompe de circulation 40 disposée au fonds du puits de cuve 6. L'actionnement de cette pompe 40 produit alors une convection forcée de l'eau, évitant alors l'apparition de la crise d'ébullition ; le percement de la cuve est alors évité.

Le retour de l'eau s'effectue en partie par le canal délimité par l'enveloppe 18 et la paroi du puits de cuve 6, et en partie par le conduit 28 via la chambre de collecte 26. Le volume d'eau évaporé est évacué comme décrit précédemment.

L'invention présente l'avantage de ne pas perturber le fonctionnement classique du système de refroidissement. En effet, en fonctionnement normal, l'air de refroidissement contourne la pompe 40, et en cas d'accident, si la pompe ne fonctionne pas, la convection naturelle de l'eau s'effectue normalement en contournant les pales de la pompe 40.

Nous allons maintenant exposer des résultats de simulation obtenus grâce au logiciel européen de calcul de scénarios d'accidents de centrales nucléaires : ASTEC V1, ce logiciel ayant été adapté pour traiter le cas de rétention en cuve avec refroidissement externe.

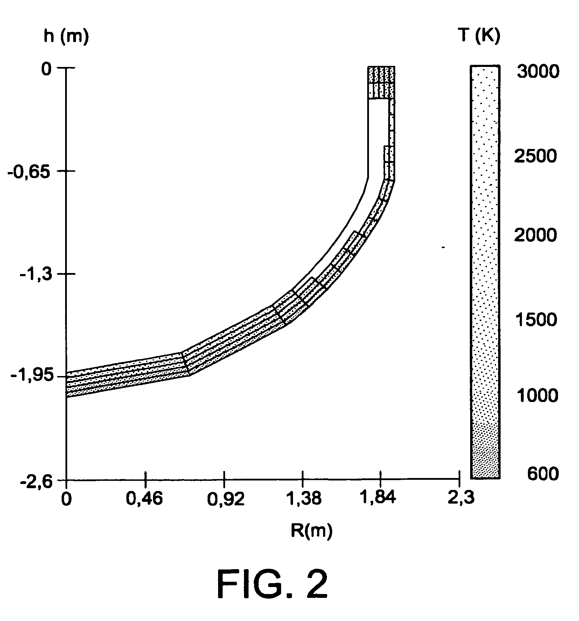

La figure 2 représente la répartition de température T en K dans le fond de la paroi de la cuve, 3349 secondes après qu'un bain de corium se soit déversé en une seule coulée dans le fond de cuve. Un quart inférieur du fond de la cuve est représenté, on peut lire en abscisse le rayon R de la cuve en mètre et en ordonnée la hauteur h en mètre de la cuve.

Pour la simulation, il a été considéré que l'eau à l'extérieur de la cuve circulait en convection forcée dans un canal de refroidissement de 15 cm d'épaisseur. Cette géométrie correspond à celle d'un réacteur de forte puissance.

On constate que, grâce à l'invention, la température du fond de la cuve est maintenue entre 600 K et 1000 K, c'est-à-dire en dessous de la température de fluage, évitant donc le percement de la cuve.

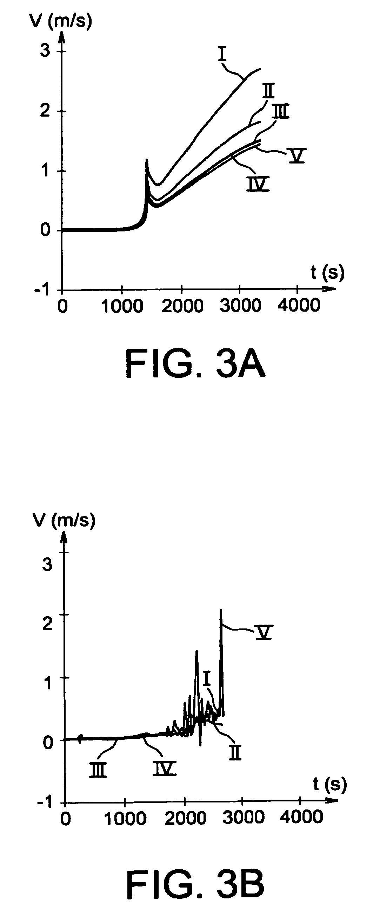

La courbe de la figure 3A représente les vitesses V de l'eau en m/s circulant dans le canal de refroidissement dans le réacteur selon l'invention à différentes hauteur par conséquent sous convection forcée en fonction du temps t en s ; la figure 3B représente la vitesse V de l'eau en m/s en convection naturelle dans le canal de refroidissement à différentes hauteurs en fonction du temps t en s. Les références I, II, III, IV, et V utilisées désignent différentes hauteurs de bas en haut.

On constate que, grâce à l'invention, il y a un gain d'un facteur 6 sur la vitesse d'écoulement de l'eau dans la zone fond de cuve où se situe le corium. Le régime d'écoulement n'est pas non plus perturbé par la vapeur se formant à la remontée grâce à la surpression engendrée par la pompe de circulation 40. Grâce à l'invention, un gain de 80% sur le flux maximal admissible est obtenu, i.e. le flux auquel la crise d'ébullition apparaît, puisque la valeur du flux dépend de la vitesse à la puissance un tiers.

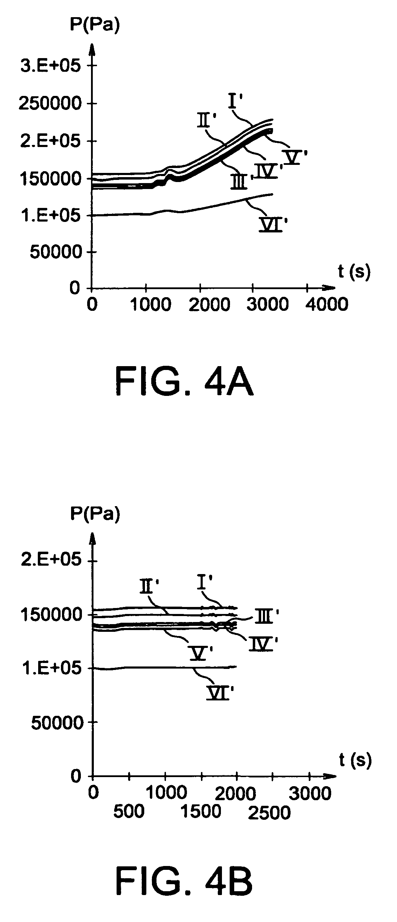

La courbe de la figure 4A représente la pression P en Pa dans le canal de refroidissement 16 à différentes hauteurs engendrée par la pompe de circulation dans le système selon la présente invention dans le canal de refroidissement 16 de la cuve 4 en fonction du temps t en seconde. On constate l'apparition d'une surpression permettant entre autre d'éviter la formation de bouchons de vapeur à la remontée, ce qui améliore la convection naturelle et donc le refroidissement. Les références I', II', III', IV', V' et VI' utilisées désignent différentes hauteurs de bas en haut.

Pour la simulation, on a pris :
- un coefficient de perte de charge singulière en sortie haute de l'espace annulaire, à l'endroit où l'eau de refroidissement s'éloigne de la cuve, égal à 0,5, identique à celui d'une conduite sortant à angle vif,
- un coefficient de perte de charge singulière, en haut du canal descendant alimentant la pompe est pris égal à 0,03, identique à celui d'un collecteur circulaire à rayon de courbure relativement élevé.

La figure 4B représente la pression engendrée dans le canal de refroidissement d'un réacteur de l'état de la technique à différentes hauteurs. Aucune surpression n'est constatée. Par conséquent, les risques d'apparition des bouchons de vapeur sont plus importants que pour le réacteur selon l'invention.

Il est à noter que la collecte de la vapeur n'est pas nécessairement de grande qualité, on peut en effet prévoir que le système de récupération de l'énergie de la vapeur puisse être très rudimentaire et avec un bas rendement, puisque l'énergie émise est très importante, en effet la puissance résiduelle dégagée par le coeur est de l'ordre de 20 MW au début, puis décroît ensuite, à titre d'exemple, c'est celle de vingt locomotives à vapeur ou d'un ferryboat ; et l'énergie nécessaire au fonctionnement de la pompe de circulation 40 est faible face à la quantité de vapeur émise. De même, l'étanchéité au niveau du circuit primaire peut être grossière sans nuire à la puissance nécessaire au système.

Ce système a l'avantage de voir sa performance s'accroître au moment où les plus forts flux se produisent contrairement aux systèmes travaillant uniquement en convection naturelle qui atteignent leurs limites au moment où le flux de chaleur à évacuer est important. Son autonomie totale de fonctionnement et son démarrage automatique permettent donc au système de refroidissement selon l'invention de se substituer au refroidissement par convection naturelle dès que la quantité de vapeur produite est suffisante.

A titre d'exemple, on peut donner les dimensions suivantes : pour une cuve de 4 m de diamètre, un espace annulaire 16 entre 5 cm et 15 cm de largeur conviendrait, cette valeur ayant été obtenue par l'expérience SULTAN, menée au CEA de Grenoble, sur l'étude de la crise d'ébullition dans un canal incliné chauffé en convection forcée). En outre, sachant de plus, que la vapeur peut atteindre 10 kg/s, soit plus de 10 m³/s à pression de fonctionnement, une chambre de collecte 26 de grand volume est préférable, par exemple 10 m³ ou plus. Ceci facilite aussi les opérations de maintenance. Dans le cas d'une géométrie plus réduite, on peut prévoir d'ajouter un dispositif séparateur eau/vapeur en amont de la pompe à lobes et de la soupape.

La présente invention est particulièrement adaptée aux réacteurs à rétention en cuve, en particulier les réacteurs à eau pressurisée (REP).

La présente invention s'applique aux réacteurs à refroidissement sous eau par convection, mais peut également s'appliquer à d'autres types de réacteurs, notamment aux réacteurs à eau bouillante par exemple. Ainsi que tout réacteur (type à eau pressurisé (REP) ou autre) dont la géométrie à la conception, n'a pas été prévue pour un refroidissement externe de la cuve sous eau en convection naturelle. Dans ce cas, du fait de la géométrie inadaptée ou trop étroite, seul un passage d'eau en convection forcée obtenue de manière simple et robuste par la présente invention peut assurer la tenue de la cuve.

## Revendications

1. Réacteur nucléaire comportant une cuve (4) contenant un coeur de réacteur, un circuit primaire pour le refroidissement du réacteur, un puits de cuve (6) dans lequel est disposée la cuve (4), un canal annulaire (16) entourant une partie inférieure de la cuve (4) dans le puits de cuve (6), des moyens aptes à remplir le puits de cuve avec un liquide, une enceinte de confinement (22) du réacteur dans laquelle sont disposées le puits de cuve et la cuve, **caractérisé en ce qu'**il comporte également des moyens de collecte (26) de la vapeur générée à une extrémité supérieure du puits de cuve (6), disposés dans l'enceinte et définissant un volume séparé par rapport au volume de l'enceinte de confinement (22) de sorte à permettre l'apparition d'une surpression de vapeur, des moyens (40) aptes à générer une convection forcée du liquide dans le canal annulaire (16), et des moyens (32, 42) pour actionner les moyens (40) aptes à générer une convection forcée, au moyen de ladite vapeur collectée.

2. Réacteur nucléaire selon la revendication 1, dans lequel les moyens aptes à collecter la vapeur (26) sont formés par une chambre de collecte séparée de l'enceinte de confinement (22), et comportent un passage d'évacuation (30) mettant en communication la chambre de collecte (26) et l'enceinte de confinement (22), les moyens (32, 42) pour actionner les moyens (40) aptes à générer une convection forcée étant interposés dans ledit passage d'évacuation pour transformer l'énergie cinétique/potentielle de la vapeur collectée en énergie motrice entraînant les moyens (40) aptes à générer une convection forcée.

3. Réacteur nucléaire selon la revendication 1 ou 2, dans lequel les moyens (32, 42) pour actionner les moyens (40) aptes à générer une convection forcée comportent une pompe à lobes (32) et un mécanisme de transmission (42) relié aux moyens (40) aptes à générer une convection forcée.

4. Réacteur nucléaire selon l'une des revendications 1 à 3, dans lequel les moyens (40) aptes à générer une convection forcée comportent une pompe de circulation disposée dans une extrémité inférieure du puits de cuve (6) au niveau d'une entrée (20) du canal annulaire (16).

5. Réacteur nucléaire selon la revendication 4 prise en combinaison avec la revendication 3, dans lequel le mécanisme de transmission (42) comporte des premier (44) et deuxième (46) arbres en prise respectivement avec la pompe à lobes et la pompe de circulation et un renvoi d'angle (47) entre les premier (44) et deuxième (46) arbres.

6. Réacteur nucléaire selon l'une des revendications 1 à 5, dans lequel les moyens pour remplir le puits de cuve (6) de liquide comportent une réserve de liquide et un conduit (28) reliant ladite réserve à l'extrémité inférieure du puits de cuve (6), ledit conduit (28) étant apte à alimenter le puits de cuve (6) en air de refroidissement en fonctionnement normal.

7. Réacteur nucléaire selon la revendication 6, dans lequel la réserve est apte à communiquer avec la chambre de collecte (26) et le conduit (28) est connecté à la chambre de collecte (26) par un connecteur de forme évasée.

8. Réacteur nucléaire selon la revendication 6 ou 7, dans lequel ladite réserve est prévue à une altitude supérieure à celle du puits de cuve de manière à ce que l'écoulement du liquide de la réserve vers le puits de cuve s'effectue par gravité.

9. Réacteur nucléaire selon la revendication 6 ou 7, comportant une pompe entraînée par les moyens (32) pour actionner les moyens aptes à générer une convection forcée, destinée à l'acheminement du liquide de ladite réserve au puits de cuve (6).

10. Réacteur nucléaire selon l'une des revendications 1 à 9, dans lequel les moyens pour actionner les moyens (40) aptes à générer une convection forcée sont également raccordés à un dispositif de conversion d'énergie mécanique en énergie électrique.

11. Réacteur nucléaire selon l'une des revendications précédente en combinaison avec la revendication 2, dans lequel la chambre de collecte (26) comporte une soupape de sécurité (36) permettant une évacuation de la vapeur vers l'enceinte de confinement (22) en cas d'apparition d'une surpression dans la chambre de collecte supérieure à une valeur donnée, par exemple de l'ordre de 0,3 bar.

12. Réacteur nucléaire selon la revendication 4 en combinaison avec la revendication 11, comportant également un séparateur liquide/vapeur en amont de la pompe et de la soupape.

13. Utilisation de l'énergie cinétique/potentielle de la vapeur générée autour d'un réacteur nucléaire lors d'un accident, ledit réacteur nucléaire comportant une cuve contenant un coeur nucléaire, un puits de cuve dans lequel est disposée ladite cuve et un canal annulaire entourant une partie inférieure de la cuve dans le puits de cuve, ladite vapeur étant la vapeur générée par un liquide remplissant le puits de cuve lors d'un accident, ladite vapeur étant utilisée pour entraîner des moyens aptes à générer une convection forcée dudit liquide dans le canal annulaire autour de la cuve.

14. Utilisation de la vapeur générée selon la revendication précédente, pour entraîner une pompe d'alimentation en liquide du puits de cuve.

15. Utilisation de la vapeur générée selon la revendication 13 ou 14 pour produire de l'électricité pour alimenter des dispositifs de surveillance.

## Claims

1. Nuclear reactor comprising a vessel (4) containing a reactor core, a primary circuit for cooling the reactor, a reactor pit (6) in which is placed the vessel (4), an annular channel (16) surrounding a lower portion of the vessel (4) in the reactor pit (6), means capable of filling the reactor pit with a liquid, a reactor containment (22) in which are placed the reactor pit and the vessel, **characterised in that** it also comprises means for collecting (26) the steam generated at an upper end of the reactor pit (6), said collecting means being placed in the containment and defining a separate volume compared to the volume of the reactor containment (22) so as to enable the onset of an excess steam pressure, means (40) capable of generating a forced convection of the liquid in the annular channel (16), and means (32, 42) for actuating the means (40) capable of generating a forced convection, by means of said collected steam.

2. Nuclear reactor according to claim 1, wherein the means capable of collecting the steam (26) are formed by a collecting chamber separate from the reactor containment (22), and comprising an evacuation passage (30) placing in communication the collecting chamber (26) and the reactor containment (22), the means (32, 42) for actuating the means (40) capable of generating a forced convection being interposed in said evacuation passage to transform the kinetic / potential energy of the steam, collected into deriving power driving the means (40) capable of generating a forced convection.

3. Nuclear reactor according to claim 1 or 2, wherein the means (32, 42) for actuating the means (40) capable of generating a forced convection comprise a lobe pump (32) and a transmission mechanism (42) connected to the means (40) capable of generating a forced convection.

4. Nuclear reactor according to one of claims 1 to 3, wherein the means (40) capable of generating a forced convection comprise a circulating pump placed in a lower end of the reactor pit (6) at the level of an inlet (20) of the annular channel (16).

5. Nuclear reactor according to claim 4 taken in combination with claim 3, wherein the transmission mechanism (42) comprises first (44) and second (46) shafts in mesh respectively with the lobe pump and the circulating pump and an angle transmission (47) between the first (44) and second (46) shafts.

6. Nuclear reactor according to one of claims 1 to 5, wherein the means for filling the reactor pit (6) with liquid comprise a reserve of liquid and a duct (28) connecting said reserve to the lower end of the reactor pit (6), said duct (28) being capable of supplying the reactor pit (6) with cooling air in normal operation.

7. Nuclear reactor according to claim 6, wherein the reserve is capable of communicating with the collecting chamber (26) and the duct (28) is connected to the collecting chamber (26) by a flared connector.

8. Nuclear reactor according to claim 6 or 7, wherein said reserve is provided at a height superior to that of the reactor pit so that the flow of the liquid from the reserve to the reactor pit takes place through, gravity.

9. Nuclear reactor according to claim 6 or 7, comprising a pump driven by the means (32) for actuating the means capable of generating a forced convection, intended to convey the liquid from said reserve to the reactor pit (6).

10. Nuclear reactor according to one of claims 1 to 9, wherein the means for actuating the means (40) capable of generating a forced convection are also connected to a device for conversing mechanical energy into electrical energy.

11. Nuclear reactor according to one of the preceding claims in combination with claim 2, wherein the collecting chamber (26) comprises a safety valve (36) enabling an evacuation of the steam to the reactor containment (22) in the event of the appearance of an excess pressure in the collecting chamber greater than a given value, for example of the order of 0.3 bars.

12. Nuclear reactor according to claim 4 in combination with claim 11, also comprising a liquid /steam separator upstream of the pump and the safety valve.

13. Use of the kinetic / potential energy of the steam generated around a nuclear reactor during an accident, said nuclear, reactor comprising a vessel containing a reactor core, a reactor pit in which is placed the vessel and an annular channel surrounding a lower portion of the vessel in the reactor pit, said steam being the steam generated by a liquid filling the reactor pit during an accident, said steam being used to drive means s capable of generating a forced convection of sailed liquid in the annular channel around the vessel.

14. Use of the steam generated according to the preceding claim to drive a pump for supplying the reactor pit with liquid.

15. Use of the steam generated according to claim 13 or 14 to produce electricity for supplying monitoring devices.

## Patentansprüche

1. Kernreaktor umfassend einen Behälter (4), der einen Reaktorkern, einen Primärkreislauf zum Kühlen des Reaktors, einen Behälterschacht (6), in welchem der Behälter (4) angeordnet ist, einen ringförmigen Kanal (16), der einen unteren Anschnitt des Behälter (4) im Behälterschacht (6) umgibt, geeignete Mittel zum Füllen des Behälterschachts mit einer Flüssigkeit, einen Sicherheitsbehälter (22) des Reaktors, in welchem der Behälterschacht und der Behälter angeordnet sind, **dadurch gekennzeichnet, dass** er gleichermaßen Sammelmittel (26) für Dampf umfasst, der in einem oberen Ende des Behälterschachts (6) erzeugt wird, die im Mantel angeordnet sind und die ein gesondertes Volumen bezüglich des Volumens des Sicherheitsbehälters (22) definieren, um damit das Auftreten eines Dampfüberdrucks zu erlauben, Mittel (40), die geeignet sind, eine erzwungene Konvektion der Flüssigkeit in dem ringförmigen Kanal (16) zu erzeugen, und Mittel (32, 42) zum Antreiben der Mittel (40), die geeignet sind, mittels des gesammelten Dampfes eine erzwungene Konvektion zu erzeugen.

2. Kernreaktor nach Anspruch 1, in welchem die Mittel, die zum Sammeln des Dampfes (26) geeignet sind, gebildet sind durch eine Sammelkammer, die getrennt vom Sicherheitsbehälter ist, und die einen Ablassdurchfluss (30) umfasst, der die Sammelkammer (26) mit dem Sicherheitsbehälter verbindet, wobei Mittel (32, 42) zum Antreiben der Mittel (40), die geeignet sind, eine erzwungene Konvektion zu erzeugen, in dem Ablassdurchgang zwischengestellt sind, um gesammelte kinetische/potentielle Energie des Dampfes in mechanische Energie umzuwandeln, die die Mittel (40), die geeignet sind, eine erzwungene Konvektion zu erzeugen, antreibt.

3. Kernreaktor nach Anspruch 1 oder 2, in welchem die Mittel (32, 42) zum Antreiben der Mittel (40), die geeignet sind, eine erzwungene Konvektion zu erzeugen, eine Drehkolbenpumpe (32) und eine Übertragungsvorrichtung (42) umfassen, die mit den Mitteln (40) verbunden ist, die geeignet sind, eine erzwungene Konvektion zu erzeugen.

4. Kernreaktor nach einem der Ansprüche 1 bis 3, in welchem die Mittel (40), die geeignet sind, eine erzwungene Konvektion zu erzeugen, eine Umlaufpumpe umfassen, die an einem unteren Ende des Behälterschachts (6) auf Hohe eines Einlasses (20) des ringförmigen Kanals (16) angeordnet ist.

5. Kernreaktor nach Anspruch 4 in Kombination mit Anspruch 3, in welchem die Übertragungsvorrichtung (42) erste (44) und zweite (46) Wellen, die jeweils an die Drehkolbenpumpe und die Umlaufpumpe gekoppelt sind, und eine Eckumlenkung (47) zwischen den ersten (44) und zweiten (46) Wellen, umfasst.

6. Kernreaktor nach einem der Ansprüche 1 bis 5, in welchem die Mittel zum Füllen des Behälterschachts (6) mit Flüssigkeit einen Flüssigkeitsvorrat und eine Leitung (28), die diesen Vorrat mit dem unteren Ende des Behälterschachts (6) verbindet, umfassen, wobei die Leitung (28) geeignet ist, im Normalbetrieb den Behälterschacht (6) mit Kühlluft zu versorgen.

7. Kernreaktor nach Anspruch 6, in welchem der Vorrat geeignet ist, mit der Sammelkammer (26) verbunden zu sein, und die Leitung (28) mit der Sammelkammer (26) über eine aufgeweitete Verbindung verbunden ist.

8. Kernreaktor nach Anspruch 6 oder 7, in welchem der Vorrat in einer höheren Höhe als jene des Behälterschachts derart vorgesehen ist, dass sich das Strömen der Flüssigkeit des Vorrats in Richtung des Bellälterschachts durch die Schwerkraft einstellt,

9. Kernreaktor nach Anspruch 6 oder 7, umfassend eine Pumpe, die durch die Mittel (32) zum Antreiben der Mittel, die geeignet sind, eine erzwungene Konvektion zu erzeugen, angetrieben wird, und welche zur Beförderung der Flüssigkeit des Vorrats in den Behälterschacht (6) bestimmt ist.

10. Kernreaktor nach einem der Ansprüche 1 bis 9, in welchem die Mittel zum Antreiben der Mittel (40), die geeignet sind, eine, erzwungene Konvektion zu erzeugen, auch an eine Vorrichtung zur Umwandlung von mechanischer Energie in elektrische Energie angeschlossen sind.

11. Kernreaktor nach einem der vorhergehenden Ansprüche in Kombination mit Anspruch 2, in welchem die Sammelkammer (26) ein Sicherheitsventil (36) umfasst, das ein Ablassen des Dampfes in den Sicherheitsbehälter (22) erlaubt, im Falle eines Auftretens eines Überdrucks in der Sammelkammer über einen gegebenen Wert, beispielsweise in der Größenordnung von 0,3 bar.

12. Kernreaktor nach Anspruch 4 in Kombination mit Anspruch 11, der auch einen Flüssigkeits-/Dampfabscheider umfasst, der der Pumpe und dem Ventil vorgeschaltet ist.

13. Verwendung der kinetischen/potentiellen Energie eines Dampfes, der um einen Kernreaktor herum bei einem Unfall erzeugt wird, wobei der Kernreaktor einen Behälter, der einen Reaktorkern, einen Behälterschacht, in welchem der Behälter angeordnet ist, und einen ringförmigen Kanal umfasst, der einen unteren Abschnitt des Behälters im Behälterschacht umgibt, wobei der Dampf der Dampf ist, der durch eine Flüssigkeit, die bei einem Unfall den Behälterschacht füllt, erzeugt wird, wobei der Dampf zum Antreiben der Mittel, die geeignet sind, eine erzwungene Konvektion jener Flüssigkeit in dem ringförmigen Kanal um den Behälter herum zu erzeugen, benutzt wird.

14. Verwendung des erzeugten Dampfes nach dem vorhergehenden Anspruch, zum Antreiben einer Flüssigkeitsversorgungspumpe des Behälterschachts"

15. Verwendung des erzeugten Dampfes nach Anspruch 13 oder 14, zum Erzeugen von Elektrizität zum Versorgen von Überwachungsvorrichtungen.
